# EUROPEAN PATENT APPLICATION

(11) **EP 2 667 072 A1**
(43) Date of publication of application: **27.11.2013**
(21) Application number: 12168730.5
(22) Date of filing: 21.05.2012
(51) Int. Cl.: F16L 9/128, F16L 9/12, F16L 11/08

(54) **Thermoplastic pipe having longitudinally arranged continuous fiber reinforcement and production method thereof**

(71) Applicant: MIR Arastima ve Gelistime A.S., 34220 Istanbul (TR)
(72) Inventor: Gemici, Zafer, 34220 Istanbul (TR); Birtane, Tamer, 34220 Istanbul (TR); Dogu, Mustafa, 34220 Istanbul (TR); Güler, Ümit, 34220 Istanbul (TR)
(74) Representative: Sevinç, Erkan

(57) **Abstract**

The present invention proposes a composite pipe (1) comprising at least a first thermoplastic layer (4) and at least a second thermoplastic layer (2). Said at least the first thermoplastic layer (4) longitudinally covers said at least second thermoplastic layer (2). Further, at least one tape (3) is longitudinally secured in between said at least first and at least second thermoplastic layers. Said at least one tape (3) comprises a plurality of continuous fiber bundles extending in a substantially axial manner. Said continuous fiber bundles within said at least one tape are fully encapsulated within a thermoplastic material such that a reinforced composite pipe (1) comprising a plurality of thermoplastic layers reinforced with continuous fiber tapes are provided. Full encapsulation provides a more stable adhesion of said tapes within the pipe leading to more homogenous inter-relation between thermoplastic material and said fiber bundles such that a balanced and homogenous response lengthways of said tapes against deformation stress is obtained.

## Description

### Technical Field of the Invention

The present invention relates to a continuous fiber reinforced composite pipe and the production method thereof.

### Background of the Invention

One of the most important factors in the life and performance of a piping system is the material of which it is made. Some materials used in the piping systems are not ideal for carrying water in terms of long-term durability. An "ideal" material in this sense should not affect water by contamination. In other words, it should be inert against water. Thus, suitable piping materials should not affect or be affected by water. Good piping materials should last as long as the building they are used in. When a piping system fails in this respect, it shortens the life of the other components of the building.

Polypropylene is a durable and long-lasting, non-leaching material which does not interact with water. It is therefore a clear candidate for the desired task. It is suitable to be used even at deionized and high purity water systems simply because of this. Acidic or basic aqueous mixtures can also be transported through polypropylene pipes because it is durable against many aggressive environments such as acidic waste systems. It is a fully recyclable thermoplastic material. Additionally, polypropylene is very suitable for use in potable water and hot water distribution lines. Because of its hydrophobic nature, polypropylene is durable against pin-hole leaks; and the low friction between the pipe surface and water makes a smooth and quiet transportation possible, which requires less energy consumption by pumps.

Polypropylene random (PP-R) is a physically and chemically advantageous material which is a co-polymer of polypropylene with short ethylene molecules randomly inserted into the main polypropylene polymer chain. Short ethylene molecules - are flexible material, where long-chain polypropylene - is a rigid version made from the same monomer. Polypropylene random (PP-R) uses random lengths of these chains to be both rigid and slightly flexible. The flexibility helps to protect the pipe from external damages by absorbing the physical stresses such as impacts, density changes by freezing, expansion, vibrations and water hammer effect.

High thermal expansions on plastic pipes used in hot fluid lines require additional measures. Such high thermal expansion coefficients are already minimized by employing additional layers made of other materials with lower thermal expansion coefficients, thus composite pipes are being acquired. Especially by indoor heating system pipelines, a modification on PP-R pipes becomes necessary. Higher-temperature fluid at indoor heating system pipelines contacts and expands the pipe material because of the heat transfer from heating liquid to the surrounding solid.

Continuous fiber reinforced PP-R composite pipes are used in transportation of cold and hot fluids at indoor and outdoor heating and sanitary systems. At heating system installations, continuous fiber reinforced PP-R composite pipes are usually preferred over non-composite PP-R pipes in order to maintain the shape of the pipeline thanks to their relatively low thermal expansion coefficient. Continuous fiber reinforced PP-R composite pipes are also advisable for drinking water systems installations due to their drinking water approval. Although PP-R survives at such higher temperatures usually without developing any fractures, the thermal expansion still causes deformations on the pipe.

In order to prevent the thermal expansion based deformations, multilayer composite thermoplastic pipes reinforced with lower linear thermal expansion coefficient materials are known intrinsically . Additional materials with lower linear thermal expansion coefficients e.g. aluminum or glass fiber used for reinforcing the PP-R pipes are employed in water supply and heating systems. For example, linear thermal expansion coefficient of polypropylene can be reduced from a magnitude of 100-200 µm/m°C to ca. 30-35 µm/m°C.

The reinforcing material is arranged onto the surface of the pipe, and an additional plastic layer is applied over the reinforcing material to protect the latter from external physical damages. Additionally, the reinforcing material preferably prevents or reduces the gas diffusion towards the transported liquid medium. The inner or outer layers of the pipe should not contain the reinforcing material e.g. aluminum or glass fiber for hygienic safety and health reasons.

As examples of such products are composite pipes with chopped glass fiber and composite pipes with aluminum foil. In composite pipes with chopped glass fiber, the interlayer is made with addition of chopped glass fibers into PPR raw material in certain proportions. This plastic raw material should be compatible with the materials of layers which are in contact with the interlayer. The stress caused by thermal expansion is carried by this interlayer which comprises chopped glass fibers. Thermal expansion of composite pipes reinforced with chopped glass fibers is slightly greater than the ones reinforced with aluminum foil. However due to economic reasons, composite pipes reinforced with chopped glass fibers are given preference over the composite pipes reinforced with aluminum foil at heating system installations.

Be that as it may, the fibers used in composite pipes reinforced with continuous glass fibers must be more effective than that with chopped glass fibers, because the continuum of the fibers along the pipe would not permit the pipe to deform in a longitudinal direction. In order to reduce the potential problems related to the production process of the composite structure, the continuous glass fibers can be arranged in the form of a tape as defined by Claim 1 whereby an even more stable mechanical interrelation is obtained by the way of applying longitudinally extending reinforced fiber bundles in the form of longitudinal tapes.

By the structure of the present invention, all of the fibers are oriented in the same direction with each other. This feature allows the fibers to function in consistence with each other. The thermal expansion aptitude along the direction, on which the continuous fibers are oriented, is virtually blocked.

Since the fibers in a continuous glass fiber reinforced composite pipe (1) are not chopped, there are usually no sharp pinpoints in the matrix, thus the resistance against external factors e.g. pressure and/or impact shock is enhanced. Continuous glass fiber reinforced composite pipe does not require an additional fine cropping and smoothening process for fittings installation.

### Objects of the Invention

Primary object of the present invention is to provide a longitudinally arranged continuous fiber reinforced composite pipe. Longitudinally arranged continuous fiber reinforcements serve for an enhanced resistance against thermal expansion of the pipe in axial direction.

Another object of the present invention is to provide a production technique for the longitudinally arranged continuous fiber reinforced composite pipe mentioned above.

### Summary of the Invention

The present invention proposes a reinforced composite pipe comprising a plurality of thermoplastic layers reinforced with continuous fiber tapes which are exposed to neither the inner nor the outer surfaces of the annular pipe.

Said tapes are made of continuous fiber bundles and they are positioned parallel to the pipe axis.

### Brief Description of the Figures

The figures whose brief explanations is herewith provided are solely intended for providing a better understanding of the present invention and is as such not intended to define the scope of protection or the context in which said scope is interpreted in the absence of the description. Since the drawings are intended only for technical explanation of a longitudinally arranged continuous fiber reinforced composite pipe and production method thereof, the lengths and proportions on the drawing do not represent those on the resulting product.
Fig. 1a and 1b respectively demonstrate a perspective and a cross-sectional view of a continuous fiber reinforced pipe according to the invention.
Fig. 2 demonstrates a general perspective view of a continuous fiber reinforced pipe production line according to the present invention.
Fig. 3 demonstrates a detailed view of a fiber reinforced pipe production line with a fiber feed line according to the present invention.
Fig. 4 demonstrates a detailed perspective view of a pressing unit according to the present invention.
Fig. 5 demonstrates a detailed view of a fiber reinforced pipe production line having an external fiber tape feed according to the present invention.

### Detailed Description of the Invention

Referring now to the figure outlined above, the present invention proposes a longitudinally arranged continuous fiber reinforced composite pipe (1) and production method thereof.

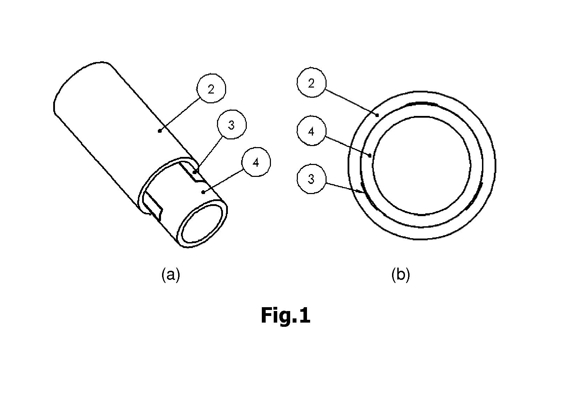

As shown in Fig.1, the continuous glass fiber reinforced pipe of the invention comprises an outer layer (2), an inner layer (4) and a plurality of continuous fiber reinforcement tapes (3). The tapes (3) are arranged on the outer surface of said inner layer (4) with variable spacings, width and quantities and parallel along the pipe axis. Widths and quantities of the fiber tapes (3) vary with the diameters of the pipes to be produced. These tapes help blocking the thermal expansion aptitude of the pipe material.

The composite pipe (1) according to the present invention comprises a plurality of layers where each of these are produced independent from each other and assembled in an appropriate manner. Inner (4) and outer (2) pipe layers are produced independently. Firstly, the inner pipe layer (4) is produced, said tapes (3) are placed over the outer surface of this inner pipe layer (4) and finally an outer layer (2) is coated over this structure to obtain the final product pipe (1).

Said inner (4) and outer (2) layers are made of thermoplastic materials, and continuous glass fiber tapes (3) are glass fiber bundles impregnated with thermoplastic materials compatible with the thermoplastic materials used in said inner (4) and outer (2) layers according to the present invention.

The final product is a composite pipe (1) with an outer layer (2) which is the outermost thermoplastic layer whose thickness varies according to the diameter and the pressure class of the final product. Continuous fiber tapes (3) according to the invention are made of continuous yarns (5) impregnated with molten thermoplastic materials. Said inner layer (4), on the other hand, is a thermoplastic structure which constitutes the innermost layer being in contact with conveyed fluids. Its thickness varies according to the diameter of the final product and also the pressure class thereof. Said inner layer (4) being the carrier for the reinforcement tapes (3), said fiber tapes (3) are provided on said inner layer (4) in the form of a continuous material which is consistent with the thermoplastic material of said inner layer (4). The thermal expansion coefficient of the fiber tape (3) material is lower than that of thermoplastic material used in said inner layer (4) and/or outer layer (2).

The fiber bundles (5) according to the present invention are provided in rolls (6) by which said continuous fiber bundles (5) are stored and transported. A pre-impregnating unit (7) contains a molten material which helps to enhance the consistence of said fiber bundles by adding a molten thermoplastic material. Said fiber bundles (5) are accordingly carried through said pre-impregnating unit (7) for wetting the same with molten thermoplastic material and then subjected to a series of heaters (8, 9 and 10).

While an inner pipe heater (8) acts as a heating element functional in heating the outer surface of said inner layer (4) to be furnished with fiber tapes (3), another heater (9) serves to the purpose of heating the outer surfaces of the fiber tapes (3) to be contacting the inner surface of said outer layer (2). Further, a tape heater (10) is used for heating the inner surface of said fiber tapes (3), i.e. the surface to be adhered to the outer surface of the inner layer (4).

Further, a pressing unit (11) according to the invention is employed as a structure comprising cylindrical rollers (12) pressing said fiber tapes (3) towards the outer surface of said inner layer (4) along the main axis of the pipe (1) to obtain a better adhesion using a certain amount of pressure. Said cylindrical rollers (12) are intended for applying a relatively small amount of force on said tapes (5) such that said tapes (5) are secured to the outer surface of said inner layer (4). The cylindrical rollers (12) rotate around their axes to minimize the friction between the corresponding surfaces of said tapes (3) and rollers (12). The cylindrical rollers (12) may conventionally be coated with special materials to maintain dirt- and dust-free operation.

An inner pipe extruder (13) is a conventional apparatus which melts thermoplastic material granules and conveys the resulting melt into an extrusion head (14). It is used for the production of said inner layer (4) on which said fiber tapes (3) are to be adhered. Accordingly said extruder (13) melts the granulated raw material and pumps the same to said extrusion head (14) with higher pressure. The extrusion head (14) distributes the melt homogeneously and its annular die lip gives the shape of pipe geometry. A vacuum tank (15) conventionally cools and solidifies said pipe shaped molten material supplied by said inner layer head (14). Pipe-shaped melt enters the vacuum tank (15) in order to maintain its form. Further, a T-die head (16) is similarly used in producing said outer layer (2) in association with an outer layer extruder (17), which melts thermoplastic granules and leads the resulting melt into said T-die head (16) producing the outer pipe (2).

The outer surface of said inner layer (4) as provided with said tapes (5) is then covered with molten thermoplastic material by means of said T-die head (16). The inner side of said T-die head (16) features a special shape through which said inner layer (4) incorporating said tapes (5) can pass through. When the inner pipe layer (4) arrives to the T-die head (16), it is already cooled and solidified with said fiber tapes (3) secured thereon. Whilst this structure passes through the T-die head, a molten material pumped by the outer layer extruder (17) is delivered and covered on said structure by means of said T-die head (16). This melt is cooled down and solidified by immersing in a cooling bath (18). Said cooling bath (18) is typically used for cooling the produced pipe by dipping the same into water. A puller (19) conventionally pulls the produced solid composite pipe continually.

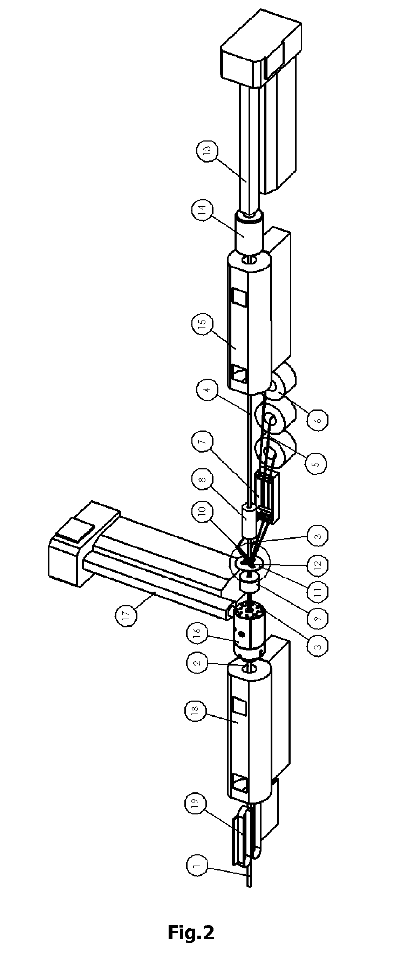

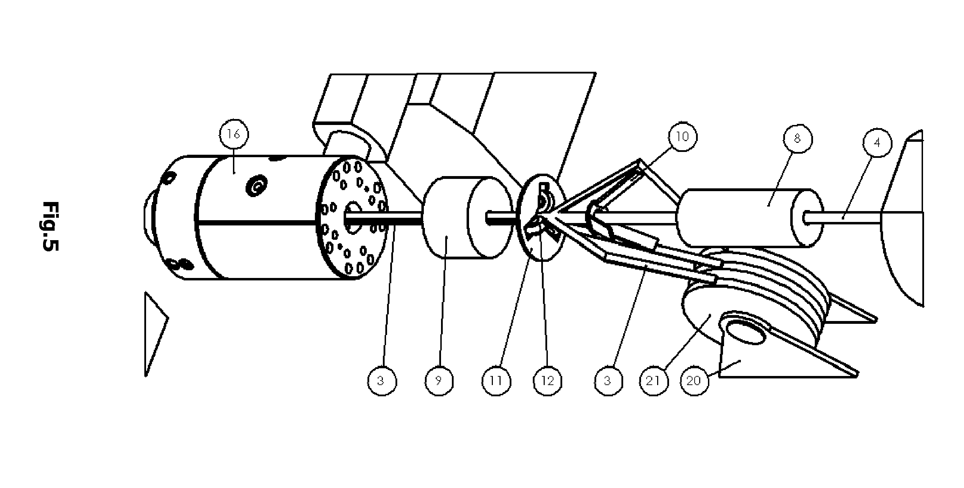

According to the present invention, bundle of fibers (5) may either be coated online to take the shape of tapes (3) and then be placed onto the pipe continuously or may be coated and given the form of tapes (3) separately. Those tapes (3) are then arranged in rolls (21). Figure 2 and Fig. 5 respectively demonstrate these situations. In other words, said fiber bundles (5) are either formed into said tapes (3) by means of said pre-impregnating unit (7) or are separately produced and fed into the system by fiber bundle rolls (21) on a fiber roll carrier (20).

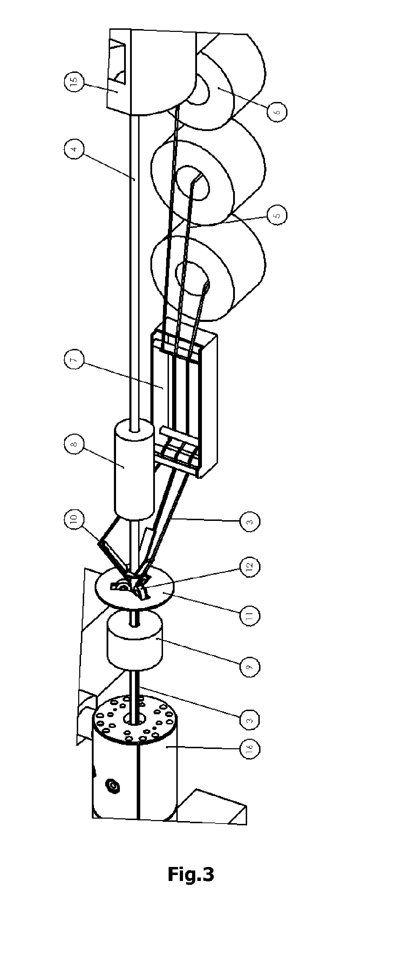

As shown in Figure 3, said continuous fiber bundles (5) are supplied in rolls (6). The continuous fiber bundles (5) leaving the rolls (6) pass through the pre-impregnating unit (7) and impregnated completely with a suitable fluid. At this stage the wetted continuous fiber structures are considered as tapes (3). They afterwards reach the heaters (10) which heat the inner sides thereof before contacting the outer surface of the inner pipe layer (4) for a better adhesion to it. Meanwhile, the outer surface of the inner pipe layer (4) also being heated and thus softened by melting by means of said inner pipe heater (8), the inner surfaces of said tapes (3) being slightly molten provide a stronger adhesion in between the outer surface of the inner pipe (4) and said tapes (3).

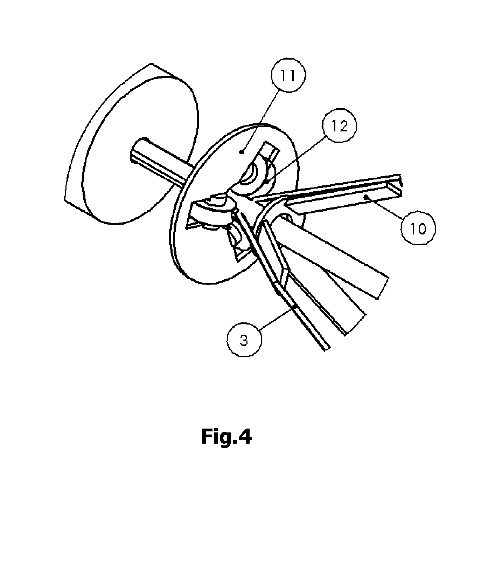

In the pressing unit (11), heated tapes (3) are pressed onto the outer side of the inner pipe layer (4) by means of said cylindrical rollers (12). The pressing unit (11) shown in Figure 4 applies a sufficient pressure to adhere the tapes (3) onto the surface, but the pressure is not too high to cause any deformations on the pipe. The cylindrical rollers (12) on the pressing unit (11) are pressing the tapes (3) on the radial direction towards the central axis of the pipe, during the heater (8) supplies heat energy to this structure. This step is followed by the application of the outer pipe layer (2) on the inner pipe layer (4) as explained earlier. While Said heater (8) heats the outer surface of said inner layer (4), its heat energy also contributes to the operation of said pressing unit (11).

Afterwards, this structure, which comprises an inner pipe layer (4) and tapes (3) arranged on its outer surface, passes through a heater (9) in order to form an integral physical entity before being subjected to a molten plastic material supplied with said outer layer extruder (17) as explained above. The aim here is to soften or slightly melt the outer surfaces of said tapes (3) and that of the inner pipe layer (4) in order to obtain a better adhesion with the recently added outer shell.

In a nutshell, the present invention proposes a composite pipe comprising at least a first thermoplastic layer (2) and at least a second thermoplastic layer (4). Said at least the first thermoplastic layer (2) longitudinally covers said at least the second thermoplastic layer (4). Further, at least one tape (3) is longitudinally secured in between said at least first and at least second thermoplastic layers (2, 4). Said at least one tape (3) comprises a plurality of continuous fiber bundles (5) extending in a substantially axial manner. Said continuous fiber bundles (5) within said at least one tape (3) are fully encapsulated within a thermoplastic material such that a reinforced composite pipe (1) comprising a plurality of thermoplastic layers (2, 4) reinforced with continuous fiber tapes (3) are provided. Full encapsulation provides a more stable adhesion of said tapes (3) within the pipe (1) leading to more homogenous inter-relation between thermoplastic material and said fiber bundles such that a balanced and homogenous response along lengthways of said tapes (3) against deformation stress is obtained.

Full encapsulation is also critical in cases where outer or inner layers (2, 4) of the pipe should not contain the reinforcing material e.g. glass fiber for hygienic safety and health reasons. To this end, said tapes (3) being fully encapsulated and then thermally bonded to said outer or inner layers (2,4) ensure that a second barrier is formed between said tapes (3) and both the environment surrounding the pipe (1) and the pipe's (1) inner space.

Further, in case said tapes (3) are radially spaced at certain angles such that an unintermittent series of tapes (3) is obtained in axial direction, again a more balanced distribution of reinforcement elements can be ensured where a more homogenous response to mechanical stress is obtained.

Finally, the method of producing a composite pipe (1) according to the present invention comprises the steps of extruding an inner pipe layer (4), wetting continuous fiber yarn (5) bundles with molten thermoplastic material to form continuous tapes (3), heating said inner layer (4) and said tapes (3), pressing said tapes (3) onto said inner layer (4) on its axial direction, heating said inner layer (4) and said tapes (3) a second time, extruding an outer pipe layer (2) onto said inner pipe layer (4), and continually pulling the produced solid composite pipe (1).

## Claims

1. A composite pipe comprising at least a first thermoplastic layer (4) and at least a second thermoplastic layer (2), said at least the second thermoplastic layer (2) longitudinally covering said at least first thermoplastic layer (4) and at least one tape (3) being longitudinally secured in between said at least first and at least second thermoplastic layers **characterized in that**;
said at least one tape (3) comprises a continuous fiber tow (5) extending substantially parallel to the primary axis of said pipe (1), and
said continuous fiber tow within said at least one tape (3) is impregnated with a thermoplastic material.

2. A composite pipe as set forth in Claim 1 wherein said at least one tape (3) comprises a plurality of paralelly extending continuous fiber (5) tows.

3. A composite pipe as set forth in Claim 1 or 2 wherein a plurality of tapes (3) are spaced circumferentially on the outer surface of said first thermoplastic layer (4) on the axial direction of said pipe (1).

4. A composite pipe as set forth in Claim 1 or 2 wherein said tapes (3) are radially distributed at certain angles such that an unintermittent series of tapes (3) is obtained in axial direction.

5. A composite pipe as set forth in Claim 1, 2 or 3 wherein said tapes (3) are radially distributed at an angular equidistance.

6. A method for producing a composite pipe (1) comprising the steps of:
a) extruding an inner pipe layer (4),
b) wetting continuous fiber (5) bundles with molten thermoplastic material to form continuous tapes (3),
c) heating said inner layer (4) and said tapes (3),
d) pressing said tapes (3) onto said inner layer (4) on its axial direction,
e) heating said inner layer (4) and said tapes (3) a second time,
f) extruding an outer pipe layer (2) onto said inner pipe layer (4), and
g) continually pulling the produced solid composite pipe (1).

7. A method for producing a composite pipe (1) as set forth in Claim 6 wherein the step of extruding an inner pipe layer (4) comprises the sub-steps of:
a) melting granulated thermoplastic raw material by means of an extruder (13) and pumping the same to an extrusion head (14) with higher pressure,
b) mixing the melt homogeneously and forming into an inner pipe layer (4) geometry,
c) solidifying said pipe shaped molten material by a vacuum tank (15).

8. A method for producing a composite pipe (1) as set forth in Claim 6 wherein the step of heating said inner layer (4) and said tapes (3) comprises the sub-steps of:
a) heating and softening the solidified outer surface of said inner layer (4),
b) heating the inner layer (4) facing surface of said tapes (3).

9. A method for producing a composite pipe (1) as set forth in Claim 6 wherein the step of pressing said tapes (3) onto said inner layer (4) comprises the sub-steps of:
a) pressing said tapes (3) towards the outer surface of said inner layer (4) on the radial direction towards the central axis of said inner layer (4) by a pressing unit (7) and,
b) simultaneously heating said pressing unit (7) during pressing operation.

10. A method for producing a composite pipe (1) as set forth in Claim 6 wherein the step of heating said inner layer (4) and said tapes (3) a second time is carried out by heating and softening the outer surface of said inner layer (4) with said tapes (3) arranged on its outer surface.

11. A method for producing a composite pipe (1) as set forth in Claim 6 wherein the step of extruding an outer pipe layer (2) on said inner pipe layer (4) comprises the sub-steps of:
a) melting granulated thermoplastic raw material by means of a second extruder (17) and pumping the same to a second extrusion head (16) with higher pressure,
b) mixing the melt homogeneously and forming into an outer pipe layer (2) geometry covering the outer surface of said inner layer (4) with said tapes (3) arranged on its outer surface,
c) cooling down said outer pipe layer (2).

12. A method for producing a composite pipe (1) as set forth in Claim 6 wherein the step of wetting continuous fiber (5) bundles with molten thermoplastic material to form continuous tapes (3) is carried out either by using already impregnated tows (2) or by hot melt impregnation.
